# EUROPEAN PATENT APPLICATION

(11) **EP 0 794 159 A1**
(43) Date of publication of application: **10.09.1997**
(21) Application number: 97300824.6
(22) Date of filing: 07.02.1997
(51) Int. Cl.: C04B 33/34, C04B 41/86

(54) **A brick and a method of manufacturing same**

(30) Priority: 08.03.1996 MY 9600864
(71) Applicant: Cement Manufacturers Sarawak Berhad, 93100 Kuching (Sarawak) (MY)
(72) Inventor: Wong, Peter Hung H., Cement Manuf. Sarawak Berhad, 93100 Kuching, Sarawak (MY)
(74) Representative: Jacob, Reuben Ellis

(57) **Abstract**

There is provided a method for making building bricks comprising producing a brick making composition comprising marine clay in a range of from 15% to 85% by weight and shale in an amount of from 10% - 90% by weight with the remainder being cement, forming the mixture into green bricks, coating at least one surface of the green bricks with a glaze composition, said at least one surface being a surface that in use of the brick will be a facing surface and firing the bricks in a furnace at a temperature of from 800°C to 2500°C for a period of from 22 to 26 hours such as to cure the bricks and fuse the glaze composition.

## Description

This invention relates to building bricks, and a method for manufacturing same.

Normal house bricks whether they are burnt or unburnt bricks have a rough surface which for internal walls, at least, requires painting or plastering and/or tiling to provide a pleasing finish.

For exterior use, such bricks, if they are not dense bricks, suffer from the problem that water may penetrate the material, causing dampness inside the building and adversely affecting the structural integrity of the wall.

It is an object of the invention to seek to mitigate problems such as these.

According to the invention, there is provided a method for making bricks comprising producing a brick making composition comprising marine clay in a range of from 15% to 85% by weight and shale in an amount of from 10% - 90% by weight with the remainder being cement, forming the mixture into green bricks, coating at least one surface of the green bricks with a glaze composition, said at least one surface being a surface that in use of the brick will be a facing surface and firing the bricks in a furnace at a temperature of from 800°C to 2500°C for a period of from 22 to 26 hours to cure the bricks and fuse the glaze composition.

This invention provides a building brick which has at least one surface, which will be a facing surface when the brick is used, glazed so that the surface of the brick is impervious to water and a wall or other structure built with the bricks does not need painting, plastering or tiling.

The brick composition preferably contains at least 5% by weight, preferably between 5% and 7% by weight, of cement with the amount of marine clay lying within the range of 15% - 35%, preferably about 20%, with the shale comprising the remainder.

The glaze composition is preferably "common" glaze and is preferably applied such that it overlaps the edges of the surface to which it is applied on all sides so that no unglazed brick surface is visible when the bricks are laid.

Preferably, the glaze is applied to two opposed surfaces to the bricks when the bricks are of such dimension to span the width of a wall. For a corner brick, the glaze may be applied to two adjoining surfaces of the brick.

For use with certain bonds such as, for example, Flemish Bond, consisting of alternate headers and stretchers, the glaze may be applied on some bricks on one or both sides and on other bricks on one or both ends.

The furnace may be of any desired type and may be heated using fuel oil or gas or electricity. Firing is preferably carried out at a temperature of at least 1000°C and is more preferably carried out at 1250 ± 50°C for 24 hours.

The invention is applicable to any shape or size of brick including tiles. The bricks may be used to build structures that require a smooth, shiny or matte surface without a further treatment such as painting or plastering or tiling.

## Claims

1. A method for making bricks characterised by producing a brick making composition comprising marine clay in a range of from 15% to 85% by weight and shale in an amount of from 10% to 90% by weight with the remainder being cement, forming the mixture into green bricks, coating at least one surface of the green bricks with a glaze composition, said at least one surface being a surface that in use of the brick will be a facing surface and firing the bricks in a furnace at a temperature of from 800°C to 2500°C for a period of from 22 to 26 hours such as to cure the bricks and fuse the glaze composition.

2. A method according to Claim 1, characterised in that the glaze is "common" glaze.

3. A method according to Claim 1 or Claim 2, characterised in that the brick composition contains at least 5% by weight of cement with the amount of marine clay lying within the range of 15% - 35%, and the shale comprising the remainder.

4. A method according to Claim 3, characterised in that the brick composition contains from 5% to 7% by weight of cement.

5. A method according to any one of Claims 1 to 4, characterised in that the glaze composition is applied such that it overlaps the edges of the surface to which it is applied on all sides so that no unglazed brick surface is visible when the bricks are laid.

6. A method according to any one of Claims 1 to 5, characterised in that glaze is applied to at least two face surfaces of the brick.

7. A method according to any one of Claims 1 to 6, characterised in that firing is carried out at a temperature of at least 1000°C.

8. A method according to Claim 7, characterised in that firing is carried out at 1250 ± 50°C for 24 hours.

9. A brick produced according to the method of any one of Claims 1 to 8.
